# EUROPEAN PATENT APPLICATION

(11) **EP 4 067 849 A1**
(43) Date of publication of application: **05.10.2022**
(21) Application number: 21166297.8
(22) Date of filing: 31.03.2021
(51) Int. Cl.: G01L 1/20, G01L 1/22, G01L 5/22

(54) **SENSOR SYSTEM FOR A THREE-DIMENSIONAL DEVICE**

(71) Applicant: ETH Zurich, 8092 Zurich (CH)
(72) Inventor: HIEROLD, Christofer, 5400 Baden (CH); ROMAN, Cosmin, 8907 Wettswil (CH); WEICHART, Johannes, 8008 Zürich (CH)

(57) **Abstract**

A sensor system (1) for a three-dimensional device (10), in particular for arrangement on a surface of and/or in a surface of a three-dimensional device (10), comprises at least one central device (2), at least one supporting device (3), and at least one sensor device (4). The supporting device (3) is in connection with the central device (2). The sensor device (4) is in communication with the central device (2). The central device (2) is configured to receive at least one sensor signal from the sensor device (4). The supporting device is of an elongated shape and extends at least partially along an elongation direction (D). The sensor device (4) is at least partially integrated into the supporting device (3).

## Description

### TECHNICAL FIELD

The present invention relates to a sensor system according to claim 1, to a three-dimensional device comprising such a sensor system according to claim 12, and to a method of producing a sensor system according to claim 14.

### PRIOR ART

Sensor systems for three-dimensional devices find many applications. For example, sensor systems for biomimetics such as tactile sensor systems are a major field of research with the goal of sensing biomimetics such as achieving human like touch sensing capabilities for next generation robots or prosthetics. The challenges are multi-dimensional. On one side, tactile sensor networks need to achieve the desired sensing capabilities. Those are a sufficient sensitivity for fine touch (1 -10 kPa), a sensor unit resolution of about one sensor per square millimetre as well as the capability to resolve higher frequencies of up to 500 Hz for vibration sensing. Another key aspect is the robustness of the sensing technology. On one side, a low susceptibility to noise from disturbances and on the other side, a mechanical robustness against destruction are desired. Another key aspect is the integration capability. This includes the necessary measures to integrate the sensing technology mechanically and electrically to fulfil the overall task of a soft sensing skin on a three dimensional body but also the simplicity of fabrication of such structures. In the prior art sensor systems with a tactile feedback are available. However, these sensor systems suffer from a low resolution or comprise very bulky setups. The sensing is performed by measuring a deformation of the soft material the sensors of the sensor system are arranged on. Other sensor systems are known, which however comprise a two-dimensional architecture and which can only be integrated with difficulty or not at all into a three-dimensional device such as in a dimensional biomimetic device, for example in artificial skin, a prosthesis or a robot.

### SUMMARY OF THE INVENTION

It is an object of the present invention to overcome the drawbacks of the prior art. In particular, it is an object to provide a sensor system for a three-dimensional device that is versatile concerning the integration into three-dimensional devices of different shapes, robust and easy to manufacture.

This object is achieved with a sensor system according to claim 1. In particular, a sensor system for a three-dimensional device, in particular a sensor system for arrangement on a surface of and/or a sensor system for arrangement in a surface of a three-dimensional device, is provided. The sensor system comprises at least one central device, at least one supporting device, and at least one sensor device. The supporting device is in connection with the central device. The sensor device is in communication with the central device. The central device is configured to receive at least one sensor signal from the sensor device. The supporting device is of an elongated shape and extends at least partially along an elongation direction. The sensor device is at least partially integrated into the supporting device.

Hence, the sensor system according to the invention is preferably configured for an arrangement in and/or on a three-dimensional device, in particular in at least one surface of a three-dimensional device and/or on at least one surface of a three-dimensional device. Said three-dimensional device could correspond to a biomimetic sensor system. As such, the sensor system according to the invention is preferably configured for biomimetics and/or for applications in biomimetics. Biomimetics, which is also known as bionics, refers to the application of biological methods and systems found in nature to the study and design of engineering systems and technology. However, other three-dimensional devices comprising or consisting of such a sensor system and/or other applications of the sensor system are likewise conceivable. For example, the sensor system could be arranged in and/or on a mechanical device or an electromechanical device. Additionally or alternatively the sensor system could be used for applications in fluid mechanics or the like. For instance, the sensor system could be used in vehicles, turbine blades, etc. and/or could be used to measure or determine aspects of fluids such as liquids, gases or plasmas or of fields such as electric, magnetic or electromagnetic fields, etc. Non-exhaustive list of examples encompass the measurement of pressure and/or flow distributions on and/or in a surface of a body or a three-dimensional device such as the measurement of fluid dynamics on turbine blades or other bodies or the measurement of expansion of mechanical excitations such as shock waves on and/or in a body or a three-dimensional device.

Partially integrated means, that the sensor device is at least partially contained in the supporting device. Likewise, the supporting device is at least partially contained in the sensor device. In other words, at least parts of the sensor device and the supporting device are structurally and/or functionally in connection with one another. Moreover, and as will be explained in greater detail below, at least parts of the supporting device and the sensor device are preferably produced simultaneously. In other words, and unlike sensor systems known in the state of the art, the sensor device according to the present invention is at least partially directly integrated into the supporting device rather than fabricated externally and then transferred onto the supporting device.

In communication means, that the sensor signal can be transmitted from the sensor device to the central device via the supporting device. It is furthermore preferred that the central device is configured to yield at least one central signal to the sensor device via the supporting device. The central signal can be generated by the central device and/or by another device such as a processing device, see further below.

The central device and the supporting device are preferably provided as a single-piece element. The central device and the supporting device being provided as a single-piece element preferably constitute a single device. In other words, the central device and the supporting device are preferably inseparable. Again in other words, the central device and the supporting device preferably are of a monolithic design. This monolithic design is preferably achieved by fabricating these components together during the same manufacturing process. None of these components is attached separately or during a later manufacturing process. The central device and the supporting device are preferably made from the same material. In particular, the central device and the supporting device preferably comprise or consist of one or more polymers or co-polymers thereof and/or are preferably electrically insulating. A preferred polymer is polyimide. However, other polymers known in the art are likewise conceivable.

Since the sensor device is at least partially integrated into the supporting device the sensor device is part of said monolithic design as well. Thus, the central device, the supporting device and at least partially also the sensor device can be said to constitute a single-piece or monolithic substrate. The advantages of such a monolithic design can be seen in the provision of the major components of the sensor system such as the central device, the supporting device and at least partially also the sensor device as one object that lacks fragile parts, which is robust and harder to damage than sensor systems of the prior art which comprise components being integrated by soldering, for example.

The sensor system, in particular the central device and/or the supporting device and/or the sensor device, is preferably bendable and/or stretchable.

A bendable sensor system is a sensor system whose shape can be changed upon application of a bending force. For example, an initially straight sensor system could be bent into a curved shape. Said bending can occur along different spatial directions. To this end it is conceivable to bend the entire sensor system or at least part of the supporting device and/or the central device and/or the sensor device within a plane being spanned by the elongation direction and the transverse direction. It is however likewise conceivable to bend the entire sensor system or at least part of the supporting device and/or the central device and/or the sensor device within a plane being spanned by the elongation direction and the extension direction, etc. Again in other words, the sensor system or at least part of the supporting device and/or the central device and/or the sensor device is preferably not rigid.

The ability of the sensor system to be bendable and/or being stretchable allows an integration of the sensor system into a device, in particular a three-dimension device having a curved surface in its idle or deformed state, preferably by wrapping the sensor system around the surface or by integrating of the sensor system into a mold. To this end various shapes of the sensor system are conceivable. For example, the sensor system could be arranged in the shape of curved surfaces like domes, tori, or any other arbitrary shape. However, non-curved shapes that undergo a deformation and hereby reach a curved shape (e.g. soft bodies with one or more integrated sensor systems) are likewise conceivable. As will be explained in greater detail below, the central device and/or the processing device are to this end preferably arranged in regions of small deformation. The support device, however, is preferably arranged in regions of large deformation due to its geometrical flexibility.

The supporting device preferably is of an essentially one-dimensional design with respect to the elongation direction. Additionally or alternatively, a length of the supporting device along the elongation direction is preferably larger than a thickness of the supporting device along an extension direction extending perpendicularly to the elongation direction. Additionally or alternatively, the length of the supporting device along the elongation direction is preferably larger than a width of the supporting device along a transverse direction extending perpendicularly to the elongation direction and to the extension direction.

The elongation direction runs perpendicularly to the extension direction. The elongation direction and the extension direction in turn run perpendicularly to the transverse direction.

The expression "an essentially one-dimensional design with respect to the elongation direction" means that the supporting device extends essentially along the elongation direction. In other words, a geometrical extension of the supporting device along other spatial directions is substantially smaller than its geometrical extension along the elongation direction.

To this end it is preferred that the supporting device has an essentially straight shape with sides that run essentially parallel to one another as well as essentially parallel to the elongation direction. However, other shapes of the supporting device are likewise preferred. For example, the supporting device can have one or more regions running at an angle to the elongation direction. For example, the supporting device could have an elongated supporting main region from which one or more supporting side regions extend laterally. In other words, the supporting device can be branched. Additionally or alternatively, the supporting device could at least partially have a curved shape. Again in other words, the supporting device can have the shape of an unbranched or branched and/or curved strip.

It should be noted that also supporting devices that are not straight in shape preferably have the largest geometrical extension along the elongation direction. The largest geometrical extension along the elongation direction can in this case be understood as the overall sum of the length-components of the supporting device along the elongation direction. Said overall sum of the length-components of the supporting device along the elongation direction preferably is greater than the overall sum of the width-components of the supporting device along the transverse direction as well as larger than the overall sum of the thickness-components of the supporting device along the extension direction.

It is particularly preferred that the length of the supporting along the elongation direction is larger than the thickness of the supporting along the extension direction as well as the width of the supporting along the transverse direction.

In particular, the length of the supporting along the elongation direction is preferably at least 1.5 times, more preferably at least 5 times, even more preferably at least 10 times larger than the thickness of the supporting along the extension direction as well as the width of the supporting along the transverse direction.

The length of the supporting device along the elongation direction preferably is between about 500 micrometer to 10 meter, more preferably between about 2 millimeter to 1 meter, particularly preferably between about 10 millimeter to 300 millimeter. The length of the supporting device along the elongation direction preferably is at least about 500 micrometer, more preferably at least about 2 millimeter.

The thickness of supporting device along the extension direction preferably is between about 100 nanometer to 5 millimeter, more preferably between about 0.5 micrometer to 1 millimeter, particularly preferably between about 1 micrometer to 100 micrometer. The thickness of the supporting along the extension direction preferably is at least about 100 nanometer, more preferably at least about 0.5 micrometer.

The width of the supporting device along the transverse direction preferably is between about 1 micrometer to 100 millimeter, more preferably between about 10 micrometer and 50 millimeter, and particularly preferably between about 100 micrometer and 10 millimeter. The width of the supporting along the transverse direction preferably is at least about 1 micrometer, more preferably at least about 10 micrometer.

The thickness of the supporting device is preferably smaller than the width of the supporting device. In particular, the thickness of the supporting device is preferably at least 5 times, more preferably at least 10 times, and particularly preferably at least 30 times smaller than the width of the supporting device. A preferred thickness of the supporting device is about 15 micrometer and a preferred width of the supporting device is about 600 micrometer.

The sensor system preferably further comprises at least one further supporting device, wherein said further supporting device is configured at least partially, preferably entirely, separately from the supporting device. It is particularly preferred that the sensor system comprises a plurality of supporting devices.

That is, if two or more supporting devices are present said two or more supporting devices are preferably configured at least partially separately from one another. At least partially separately configured supporting devices define a distance or gap between one another. To this end it is particularly preferred that the supporting devices are configured entirely separately from one another, i.e. they correspond to individual components. For example, two or more individual supporting devices can be preferably integrally connected to or being formed on the central device while their remaining parts extend away from the central device.

If two or more supporting devices are provided these two or more supporting devices can have a same shape or a different shape. For example, a first supporting device can have a straight shape, a second supporting device can be branched, a third supporting device can be curved, etc. Furthermore, different arrangements and/or orientations of the supporting devices are likewise conceivable. For example, two or more of the supporting devices could be arranged next to one another with respect to the transverse direction and/or two or more supporting devices could be arranged at least partially above one another with respect to the extension direction. That is, two or more supporting devices could be arranged so as to form a stack. It is particularly preferred that the sensor system comprises a plurality of supporting devices. Said plurality of supporting devices preferably form a network, in particular a network of fibers.

If the sensor system comprises two or more supporting devices it is preferred that at least two or more of these supporting devices are summarized, i.e. in connection with one another and with the central device via at least one common port. For example, a first supporting device comprising a sensor device and a second supporting device comprising a sensor device could be provided, wherein each sensor device is connected together to a common readout port in a rerouting. In this case, the sensor device of the first supporting device could be read out when a central signal is supplied to the sensor device of said first supporting device while the sensor device of the second supporting device is read out when the central signal is supplied to the sensor device of said second supporting device.

The sensor system preferably comprises two or more sensor devices. Said two or more sensor devices are preferably arranged at least partially along the supporting device and/or along the elongation direction. Additionally or alternatively said two or more sensor devices are preferably arranged in succession. Additionally or alternatively two or more sensor devices are preferably the same or different from one another.

It is particularly preferred that the sensor system comprises a plurality of sensor devices, wherein said plurality of sensor devices are at least partially integrated into the supporting device as described above. The plurality of sensor devices are preferably arranged at least partially along the supporting device, e.g. they can be arranged at various locations in the supporting device. It is furthermore preferred that said plurality of sensor devices are arranged along the elongation direction of the supporting device. Additionally or alternatively it is furthermore preferred that the plurality of sensor devices are arranged in succession, i.e. one after the other. The plurality of sensor devices are particularly preferably arranged in succession with respect to the elongation direction. The distances between successive sensor devices can be the same or different. The depth arrangement of the sensor devices, i.e. the location of the sensor devices with respect to the extension direction, can be the same or different.

Sensor devices being different from one another can correspond to sensors of different types. Conceivable types of sensors are capacitive sensors, temperature sensors, heat flux sensors, strain sensors, etc. For example, a first sensor device could correspond to a capacitive sensor and a second sensor device could correspond to a temperature sensor. Additionally or alternatively the one or more further sensor devices being different from the one or more sensor devices being different from one another can be arranged differently on and/or in the supporting device. Namely, one or more sensor devices could be arranged at least partially integrated into the supporting device. One or more further sensor devices could be arranged differently in that they are not at least partially integrated into the supporting device but are arranged on a surface of the supporting device, for example. In any case, it is preferred that also these one or more further sensor devices are arranged along the elongation direction and/or are arranged in succession and/or that distances between successive further sensor devices are the same or different and/or that a depth arrangement of the further sensor devices are the same or different, etc..

The supporting device preferably comprises at least one supporting layer and the sensor device preferably comprises at least one sensor layer. The supporting layer and the sensor layer are preferably arranged above one another with respect to an extension direction extending perpendicularly with respect to the elongation direction. Additionally or alternatively the supporting layer and the sensor layer are preferably arranged alternatingly with respect to the extension direction.

The central device preferably comprises at least one central layer. In particular, since the central device and the supporting device preferably correspond to a single-piece element and/or are preferably manufactured during the same manufacturing step, it is particularly preferred that each supporting layer of the supporting device merges or segues into a particular device layer of the central device. In other words, a particular supporting layer and a particular device layer form a single or one-piece layer. Explanations made with respect to a supporting layer thus likewise apply to a central layer and vice versa.

It is particularly preferred that the sensor device comprises at least one sensor layer that is configured to yield the at least one sensor signal and/or to transmit the at least one sensor signal to the central device and/or to receive at least one central signal yielded by the central device. In other words, the at least one sensor layer is preferably configured for sensing and/or for transmitting the sensed sensor signal and/or for transmitting a central signal used for the sensing. Again in other words, the at least one sensor layer is preferably a conducting layer that can conduct signals, particularly preferably electrical signals. Thus, the sensor signal and/or the central signal preferably corresponds to an electrical signal. Various electrical signals are conceivable. For example, the signals can correspond to a voltage and/or a current, wherein AC and DC currents are conceivable. Various forms such as spikes, rectangular waves, etc., are also conceivable. To this end it is conceivable that one single sensor layer is configured to perform all of these functions. However, and as will be explained in greater detail below, it is likewise conceivable that two or more sensor layers are provided, and wherein these functions are performed at least partially individually by individual sensor layers. If two or more sensor layers are provided it is preferred that a supporting layer is arranged between two consecutive sensor layers.

The at least one supporting layer preferably is configured and/or arranged for providing a mechanical integrity and/or an insulation, preferably an electrical insulation. Hence, it is particularly preferred that the supporting layer comprises or consists of at least one electrically insulating element and/or of a non-conducting element.

As such it is furthermore preferred that the sensor system comprises components such as one or more electrodes that are arranged in the sensor layer(s) and that are configured to yield a sensor signal in response to an impact such as a displacement of the sensor system or a touch of the sensor system. Additionally or alternatively the sensor system preferably comprises one or more supply elements that are in connection with the sensor layer(s) and the central device and that are configured to supply at least one central signal yielded by the central device to the sensor layer(s). Additionally or alternatively it is preferred that the sensor system comprises one or more readout elements that are in connection with the central device and the sensor layer(s) and that are configured to receive the at least one sensor signal through the central device. It is furthermore preferred that the supply elements and/or the readout elements are arranged symmetrically and/or centrally in the sensor system, in particular in the sensor device, when the sensor system, in particular the sensor device, is seen in cross-section. This arrangement enables the prevention or at least reduction of strain that could otherwise occur when bending these elements. It should be noted that the supply and the readout could likewise be performed by the same element. The readout element and/or the supply element are preferably configured for transmitting signals going to and/or coming from the sensor layer(s). They preferably correspond to wiring of small chips as they are known in the art. If two or more readout elements are provided it is furthermore preferred that readout elements having a same index are summarized. It is also preferred that the one or more supply elements and/or the one or more readout elements are arranged symmetrically and/or centrally in the sensor layer(s) and/or the supporting layer(s). The sensor system can further comprise at least one shielding element that is configured to shield the readout element and/or the supply element. It is furthermore preferred that the sensor layer(s) and/or the supporting layer(s) comprise one or more anchor elements and/or one or more vias elements that are configured to mechanically and/or electrically connect the sensor layer(s) and/or the supporting layer(s) and/or the central device with one another. Thus, the supporting device preferably is in connection with the central device via the one or more readout elements and/or the one or more supply elements mentioned above, and wherein said one or more readout elements and/or said one or more supply elements can extend at least partially along and/or within the supporting device, in particular the one or more supporting layers. Furthermore, the at least one or more sensor devices can be in communication with the central device via common one or more readout elements and/or via common one or more supply elements. It is however likewise conceivable that one or more sensor devices are in communication with the central device via individual one or more readout elements and/or individual one or more supply elements.

Hence, as mentioned earlier, it is conceivable that the sensor system comprises one supporting layer and one sensor layer only. However, the provision of several supporting layers and several sensor layers has the advantages that the functions can be parallelized and much closer packaged.

At least one sensor layer is preferably provided as a membrane layer being configured to yield the at least one sensor signal and/or to enable an electrical switching. At least one sensor layer is preferably provided as an electrode layer being configured to yield the at least one sensor signal. As such it is preferred that the electrode layer preferably comprises or consists of at least one electrode. Additionally or alternatively at least one sensor layer is preferably provided as a wiring layer being configured to yield the at least one sensor signal and/or to transmit the at least one sensor signal to the central device. The wiring layer preferably comprises at least one readout element and/or at least one supply element. The at least one supporting layer is preferably provided as a base layer being configured to support the at least one sensor layer. Additionally or alternatively at least one supporting layer is preferably provided as an interconnection layer comprising or consisting of at least one electrically insulating element.

The membrane layer can exhibit functionalities. For example, it can serve the purpose of electrically conducting and to transfer the sensor signals. That is, the membrane layer can serve the purpose of sensing. However, it can also serve the purpose of generating or participating in the generation of a sensor signal. For instance, and as will be explained in greater detail below, the membrane layer can constitute or participate in the constitution of the sensor device such as a capacitive sensor, and wherein a deformation of the membrane layer changes a capacity which change can constitute a sensor signal yielded by the sensor device. In addition, the membrane layer can also serve the purpose of enabling an electrical switching. Namely, and as will be explained in greater detail below, the membrane layer is preferably deformable, for example when being subject to internal and external influences such as upon receipt of an electrical signal and/or upon application of a bending force. When being bent the membrane layer can establish an electrical contact with at least one further sensor layer such as the electrode layer, whereby a closed switch between the membrane layer and the electrode layer is established. In this closed state another electrical signal is allowed to pass through the closed switch. Hence, the membrane layer can be configured and arranged such as to provide a micro-relay switch that allows switching on and off larger voltages or power upon receipt of a carrier signal. This can be beneficial for various needs where larger power flows need to be regulated.

Hence, the sensor system preferably comprises a multi-layer structure that is constituted by the sensor layers and the supporting layers, wherein the supporting layers and the sensor layers are preferably arranged alternatingly with respect to the extension direction. To this end it is particularly preferred that the multi-layer structure comprises in this sequence along the extension direction the following layers:
- the membrane layer;
- a first interconnection layer, this first interconnection layer can also be referred to as protection layer;
- the electrode layer;
- a second interconnection layer;
- the wiring layer;
- the base layer.

Thus, the wiring layer preferably comprises at least one supply element that is in connection with the central device and that is configured to supply at least one central signal yielded by the central device to the wiring layer. The supply element preferably is an electrically conducting wire. Additionally or alternatively the wiring layer preferably comprises at least one readout element that is in connection with the central device and that is configured to supply the at least one sensor signal to the central device. The readout element preferably is an electrically conducting wire. Also in this case it is preferred that two or more readout elements having a same index are summarized, i.e. the sensor layers of two or more supporting devices being connected together to a common port in a rerouting. It is furthermore preferred that the supply element and/or the readout element is arranged symmetrically and/or centrally in the wiring layer when the wiring layer is seen in cross-section. However, here again it should be noted that the supply and readout could be provided by a common element instead of a readout element and a supply element.

The electrode layer comprises at least one electrode that is configured to yield the at least one sensor signal. To this end various electrodes are conceivable. For example, the electrode can be a resistive electrode, preferably in the shape of a meander. However, any other electrodes such as a charge collector is likewise conceivable. For example, one electrode could be provided in order to measure vertical displacements or three electrodes could be provided in order to measure three-dimensional displacements. In other words, a readout of deformations of the membrane layer can be done with one or multiple electrodes which allows the extraction of a multitude of data. A charge collector is particularly preferred when the sensor device is used as a capacitive sensor, e.g. in the event that the sensor device shall serve the purpose of a touch sensor, or to measure close fields or proximity. The membrane layer can have various designs. For example, the membrane layer can have an open circumference or a closed circumference, the membrane layer can have one or more patternings, etc.

It is furthermore preferred that the electrode layer comprises at least one shielding element that is configured to shield the readout element and/or the supply element. The shielding element preferably has the shape of a grid and/or comprises or consists of one or more metals.

It is furthermore preferred that the electrode layer comprises at least one anchor element that is configured to mechanically and/or electrically connect the electrode layer to the membrane layer. The anchor element preferably comprises or consists of a metal such as a metal plate. Additionally or alternatively it is furthermore preferred that the one or more interconnection layers and/or the base layer comprise at least one via element, wherein the via element is configured to mechanically and/or electrically connect the electrode layer to the membrane layer and/or to the wiring layer. In other words, it is preferred that the one or more supporting layers comprise one or more via elements that allow an interconnection of the sensor layers through the supporting layers.

The membrane layer is preferably arranged at least partially in a suspended manner. Additionally or alternatively the membrane layer is preferably deformable. Additionally or alternatively the membrane layer is preferably spring-mounted, particularly preferably via one or more spring elements.

Being arranged at least partially in a suspended manner means, that a gap is formed by the arrangement of the membrane layer. Said gap is formed between the membrane layer and the component the membrane layer is arranged on. Here, said component corresponds to the first interconnection layer or to the protection layer. In other words, the membrane layer is at least partially arranged at a distance from the component the membrane layer is arranged on. Again in other words the membrane layer is configured such, that a gap is formed between at least a region of the membrane layer and the first interconnection layer or the protection layer when seen along the extension direction. The gap preferably corresponds to a space being filled with air or a material having a low elastic modulus such as a polymer or the like.

The membrane layer and the electrode layer preferably constitute the sensor device. Said sensor device particularly preferably is a capacitive sensor.

As has been mentioned already above, the membrane layer can serve the purpose of sensing and/or generating or participating in the generation of a sensor signal. Namely, the membrane layer and the electrode layer can constitute the sensor device such as a capacitive sensor, wherein upon a deformation of the membrane layer, the impedance between the membrane layer and a subjacent electrode layer changes, i.e. a capacity changes. This change can be measured and, if desired, hereby any outer influence which deforms the membrane. The capacitive sensor preferably is configured to sense pressure and/or forces and/or vibration. Furthermore, the membrane layer can be built up with one or several membrane sub-layers for getting a stress compensation of the membrane, hereby avoiding deformation or allowing reduction of temperature influences. Pre-stressing by suitable material configurations can furthermore be used for precise tuning of the membrane deformation. That is, the membrane layer can be a single or multi-layer of films or the like, giving different capabilities to the membrane. Possible materials are various metals (Ti, Cu, Ni, Au, CuBe, ...), polymers or copolymers thereof, preferably polymers commonly used in RDL (RDL = redistribution layer), oxides and/or nitrides which can furthermore preferably be patterned, etc.

The sensor system preferably further comprises at least one movement element that is arranged on the membrane layer, wherein the movement element is configured to move the membrane layer along one or more spatial directions. Additionally or alternatively the sensor system preferably further comprises at least one stopper element that is configured to influence and/or modify a movement of the membrane layer.

The movement of the membrane layer could correspond to a vertical movement, i.e. a movement along the extension direction such as towards and away from the interconnection layer the membrane layer can be arranged on. The movement can also correspond to a rotational movement, i.e. to a tilt movement. Said movements can occur successively or concurrently. It is furthermore preferred that the movement element comprises or consists of a stiff material and/or comprises or consists of one or more metals. The movement element serves several purposes. For example, it can be defined as a stiff plane of the membrane layer that allows the membrane layer to move vertically so as to measure a pressure in general or it can move and do a tilt movement at the same time, wherein this tilt movement then can be measured as a difference in the distance between one or more electrodes being arranged below the membrane layer with respect to the extension direction. Moreover, the movement element can define a structure of the three-dimensional body the sensor system can be arranged in and/or on, such as the structure of the artificial skin in the event that the three-dimensional body corresponds or comprises artificial skin, see further below. The movement element and/or the membrane layer are furthermore preferably configured and/or arranged such that only the movement element and the membrane layer are movable, while the other components of the sensor system remain immovable.

The stopper element is preferably configured to influence and/or modify a movement of the membrane layer. For instance, the stopper element can at least partially stop a movement of the membrane layer. In other words, the stopper element preferably at least partially reduces a movement of the membrane layer. Said movement is preferably reduced with a same gradient of applied force. That is, when a force is applied to deform the membrane layer this first results in a range of high sensitivity due to the deformation of the typically soft membrane layer. When the deformed membrane layer is in contact with the stopper element(s), a minor deformation results in a larger measurement range and a low sensitivity region of the sensor system. As such, it is preferred that the stopper element is stiffer than the membrane layer. Again in other words, the stopper element is preferably configured to change a transfer characteristics, either by allowing further deflection of at least parts of the membrane layer or by a deformation of the membrane layer and the stopper element. The stopper element is preferably arranged between the membrane layer and the first interconnection layer and/or is provided by the first interconnection layer. The stopper element is preferably an integral part of the first interconnection layer. The first interconnection layer can thus also be referred to as stopper-protection layer. It is furthermore preferred that two or more, in particular a plurality of stopper elements are provided. Two or more stopper elements of said plurality of stopper elements can have a same or different design.

Furthermore, it is preferred that the central device comprises and/or is in connection with and/or is connectable to at least one processing device, wherein the processing device is configured to process the at least one sensor signal. As such it is preferred that the processing device comprises at least one readout chip and/or at least one readout algorithm circuit and/or at least one amplification device for amplification of the sensor signal and/or at least one digitization device for digitizing the sensor signal. A conceivable processing device is known in the state of the art and can correspond to an integrated circuit chip, a microprocessor, etc. Furthermore, said processing device can be arranged on and/or in the central device and can thus be a part of the central device and consequently of the sensor system. However, it is likewise conceivable that the processing device is provided externally i.e. separate from the central device and thus from the sensor system, and wherein the processing device and the central device are in each case configured for a communication and/or for a connection with one another. It is thus also preferred that the central device and/or the processing device comprise one or more contact pads such as an array of contact pads and/or one or more plugs such as an array of plugs and/or one or more wire bonds, etc., for communication such as communicating the sensor signals between one another or towards an outside, e.g. to another device. For instance, the sensor signals could be read out from the central device by the processing device via an array of contact pads or plugs or wire bonds that are provided on the central device. In addition, the contact pad(s) or plug(s) or wire bond(s) could furthermore serve the purpose of supplying power to the sensor system. Hence, the pad(s) or plug(s) or wire bond(s) etc. can serve several purposes associated with the communication or transfer of signals such as the sensor signals or power signals or the central signals yielded by the central device, see further below. These components and associated capabilities are defined and ascribed for the sake of simplicity to an interface device that comprises one or more pads or one or more plugs or one or more wire bonds as just described, and wherein said interface device is preferably arranged on the central device and/or on the processing device. It is furthermore preferred that the processing device is further configured for communication and/or for connection with an electrical network such as an electrical integration into an electrical network being provided on and/or in the three-dimensional device. The central device preferably comprises or consists of one or more materials that are stiffer than the supporting device. If the sensor system is arranged on and/or in a surface of a three-dimensional device it is preferred that the central device and/or the processing device are provided in a region of the three-dimension device where no or only little deformation occurs. It is furthermore preferred that the supporting device and the central device are connected, in particular integrally connected, to one another, see also further below. For instance, an end region of the supporting device can be connected to or formed on the central device while the remaining part of the supporting device extends away from the central device. To this end it is preferred that the elongation direction along which the supporting device at least partially extends runs perpendicularly to a surface of the central device. However, it is likewise conceivable that the supporting device is provided in a curved shape, wherein both of its end regions are connected to or formed on the central device. It is furthermore preferred that the sensor system comprises at least two or more central devices. At least one of the supporting devices is preferably in connection with such as connected to or formed on two or more of the central devices. For example, a first end region of a particular supporting device could be in connection with such as connected to or formed on a first central device and a second end region of said particular supporting device could be in connection with such as connected to or formed on a second central device.

Hence, in summary it can be said that the sensor system according to the invention has many advantages. For example, because of its monolithic design the major components central device, supporting device and at least partially also sensor device are provided as one object that lacks fragile parts. Moreover, it is robust and harder to damage than sensor systems of the prior art which comprise components being integrated by soldering, for example. Furthermore, because of its bendable and/or stretchable nature it can be wrapped or folded around any three dimensional device and it can deform easily under pointy objects. Furthermore, it does not influence the mechanical properties of the device it is arranged on and/or in.

In another aspect, a three-dimensional device comprising at least one sensor system as described above is provided. The three-dimensional device preferably is a biomimetic device, artificial skin, a prosthesis a robot, a mechanical device or an electromechanical device. Additionally or alternatively the sensor system preferably is implemented as a tactile sensor system.

Any explanations provided with regard to the sensor system per se likewise apply to the three-dimensional device and vice versa.

Nevertheless, it is noted that the three-dimensional device preferably comprises at least one central device and/or at least one processing device that is configured to be in connection and/or in communication with the central device and/or the processing device of the sensor system. The central device and/or the processing device of the sensor system is furthermore preferably configured to yield at least one feedback signal that is responsive to the at least one sensor signal to the central device and/or to the processing device of the three-dimensional device. The central device and/or the processing device of the three-dimensional device is preferably configured to receive said feedback signal and preferably also configured to process said feedback signal. For example, in the event that the sensor system is a tactile sensor system and the three-dimensional device is a robot, the feedback signal could correspond to a tactile feedback that enables tasks such as object recognition or object manipulation.

At least one sensor system is preferably arranged at least partially within the three-dimensional device and/or at least partially on a surface of the three-dimensional device and/or at least partially outside of the three-dimensional device and/or at least partially extends through the three-dimensional device and/or is at least partially bent.

That is to say, the three-dimensional device preferably defines a volume and/or comprises bulk material. For example, if the three-dimensional device corresponds to artificial skin, said artificial skin can comprise one or more layers of skin such as an artificial dermis layer and an artificial epidermis layer that constitute bulk material and which define a volume. To this end it is conceivable that the volume (or bulk material) of the three-dimensional device is at least partially covered by one or more sensor systems. In other words, the sensor system can at least partially extend through the three-dimensional device such as through one or more layers of the artificial skin. Additionally or alternatively, it is conceivable that the sensor system is at least partially arranged on a surface of the three-dimensional device such as on the outermost layer of the artificial skin. Additionally or alternatively it is conceivable that the sensor system at least partially extends along one or more interfaces being formed in the three-dimensional device such as along one or more interfaces established between different layers of the artificial skin. It should be noted that these different arrangements can be adopted by a single sensor system, e.g. the central device of a particular sensor system could be arranged within the dermis layer and the supporting devices of said sensor system could be arranged at the interface between the dermis layer and the epidermis layer. However, it is likewise conceivable that different arrangements are adopted by different sensor systems. For example, a first sensor system could be arranged within the dermis layer and a second sensor system could be arranged at the interface between the dermis layer and the epidermis layer. However, any other arrangement is likewise conceivable. For example, the artificial dermis could fill an entire volume of the three-dimensional device, and wherein the sensor system could be buried deeply within said dermis layer. Likewise conceivable is a three-dimensional body comprising several dermis layers and/or further layers, and wherein one or more sensor systems are arranged within or between said layers, etc.

A particular sensor system can be arranged with a constant density or with a varying density. For example, all supporting devices of said sensor system could be evenly or unevenly distributed among the biomimetic device. Likewise, two or more sensor system could be arranged with a constant density or a varying density.

The three-dimensional device is preferably configured to deform and/or to move. For example, if the three-dimensional device is a prosthesis such as an artificial hand, the artificial hand can move when it grasps objects such as a glass or a pen. If the three-dimensional device is artificial skin and the sensor system is used as a tactile sensor system, it is preferred that the artificial skin can be deformed upon touching objects. The central device is preferably arranged in a location of the three-dimensional device that is configured to undergo small deformations. Additionally or alternatively the supporting device is preferably arranged in a location of the three-dimensional device that is configured to undergo large deformations.

In another aspect a method of producing a sensor system, preferably a sensor system as described above, is provided. The method comprises the steps of (i) providing at least one central device, (ii) providing at least one supporting device, and (iii) providing at least one sensor device. The supporting device is in connection with the central device. The sensor device is in communication with the central device. The central device is configured to receive at least one sensor signal from the sensor device. The supporting device is of an elongated shape and extends at least partially along an elongation direction. The sensor device is at least partially integrated into the supporting device.

Any explanations provided with respect to the sensor system per se likewise or the three-dimensional device per se likewise apply to the method and vice versa.

The provision of the central device in step (i) and the provision of the supporting device in step (ii) mentioned above preferably correspond to the same procedural step and/or occur simultaneously. That is, steps (i) and (ii) preferably constitute a single procedural step. In other words, the central device and the supporting device are preferably manufactured as a single-piece element. Additionally or alternatively, step (ii) comprises the production of at least one supporting layer, preferably a polymer layer. Additionally or alternatively, step (iii) comprises the production of at least one sensor layer, preferably a metallic layer. Additionally or alternatively steps (ii) and (iii) are preferably alternatingly repeated. That is, the sensor device comprising one or more sensor layers is preferably directly integrated into the supporting device comprising one or more supporting layers rather than fabricated externally and then transferred onto the supporting device. Additionally or alternatively step (iii) preferably furthermore comprises the production of at least one membrane layer, wherein a sacrificial layer is applied on a supporting layer the membrane layer is to be arranged on and in a first step, and wherein said sacrificial layer is removed so as to suspend the membrane on said supporting layer in a second step. The sacrificial layer can or cannot be completely dissolved in a final release step. In order to dissolve the sacrificial layer it is preferred that the membrane layer has an opened circumference and/or comprises patternings on its top facing away from the further sensor layers and the supporting layers, i.e. the top faces an outside. However, it is likewise conceivable that the membrane layer has a closed circumference. The sensor system is preferably produced according to so-called redistribution layers (RDL layers).

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective view of a three-dimensional device in the form of an artificial finger comprising a sensor system;
- Fig. 2: shows a partial sectional view of another three-dimensional device.
- Fig. 3: show a partial view on another sensor system in a bent state;
- Fig. 4: shows a partial view on another sensor system in a bent state;
- Fig. 5: shows another view on a sensor system in a bent state;
- Fig. 6: shows a partial view on another sensor system;
- Fig. 7: shows a partial view on sensor devices and a supporting device of another sensor system;
- Fig. 8: shows a top view on another sensor system;
- Fig. 9: shows a partial sectional view of another sensor system.

### DESCRIPTION OF PREFERRED EMBODIMENTS

Aspects of the sensor system 1 according to the invention shall be illustrated with reference to the figures.

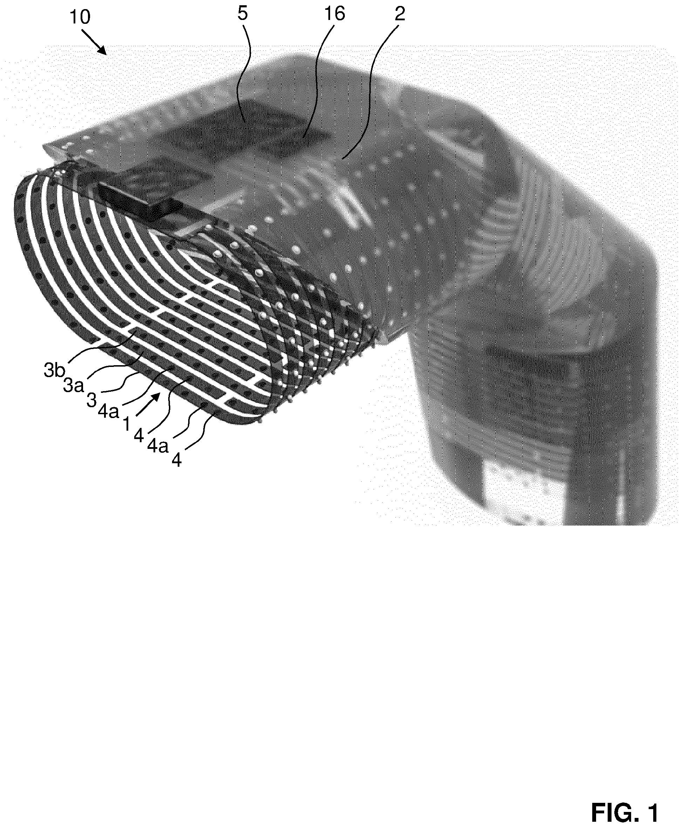

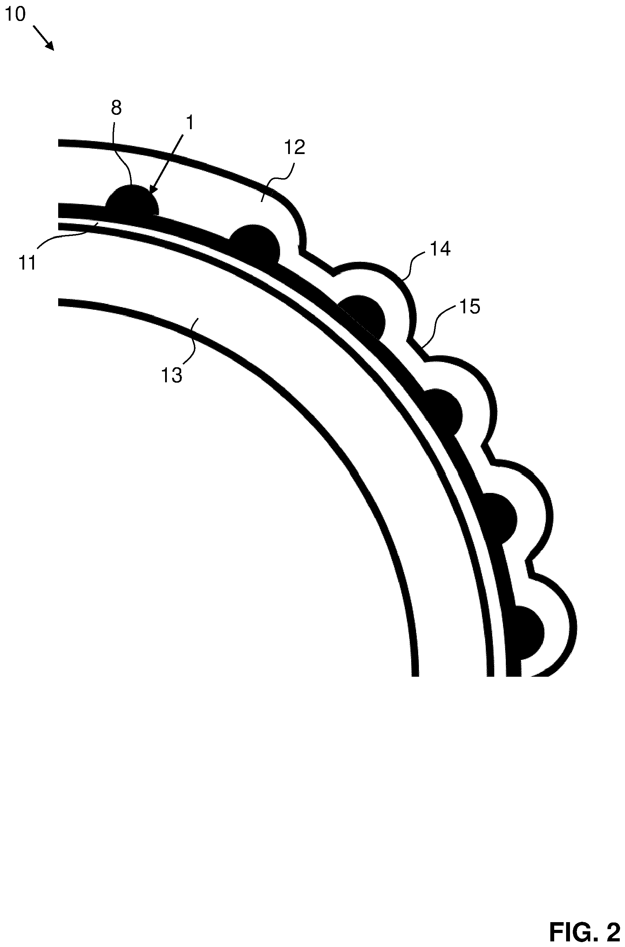

The sensor systems 1 according to the invention have in common that they comprise at least one central device 2, at least one supporting device 3, and at least one sensor device 4. The supporting device 3 is in connection with the central device 2. The sensor device 4 is in communication with the central device 2. The central device 2 is configured to receive at least one sensor signal from the sensor device 4. As best seen in figures 1 and 2, the sensor system 1 is furthermore configured for an arrangement in and/or on a three-dimensional device 10. Said three-dimensional device 10 corresponds here to a biomimetic device in the form of a robot finger comprising artificial skin, in particular an artificial dermis layer 11, an artificial epidermis layer 12, and artificial pulp 13. The artificial pulp 13 is here a soft material which can include additional functions or elements of humanoid robots. The artificial dermis layer 11 is a robust, tough layer, which can also include elements for robustness enhancement like strong fibers. The artificial epidermis layer 12 is a barrier against environmental influences. In the present example, the sensor system 1 is integrated between the artificial dermis layer 11 and the artificial epidermis layer 12 so as to mimic the setup in a human skin for optimal force transduction. The top layer, which is provided here by the artificial epidermis layer 12, comprises protrusions 14 and indentations 15 in a way that the top layer 12 mimics the fingerprint ridges for increased sensitivity.

The sensor system 1, in particular the supporting devices 3, 3a, ... and the sensor devices 4,4a, ... are bendable and/or stretchable. The ability of the sensor system 1 to be bendable and/or stretchable allows its integration into a three-dimension device 10 having a curved shape, for example by wrapping the sensor system 1, see figures 1 to 5, wherein different bent states of the sensor system 1 are shown. In fact, in the example depicted in figures 1 and 2, the sensor system 1, in particular its supporting devices 3, 3a, ... comprising the sensor devices 4, 4a, ..., is bent into a finger like structure of the three-dimensional device 10. In other words, a complete finger-like structure is obtained by bendable and stretchable sensor devices 4, 4a, ..., wherein the flexibility of the sensor system 1 allows an easy wrapping around complex three-dimensional surfaces and offers the advantage of less susceptibility to mechanical destruction. Furthermore, it also allows the usage of less flexible materials such as the central device 2 in the present case along the stiff dermis interface, paving the way for the usage of intrinsically more robust polymers and conductors. The multi-layer of soft materials (here: the artificial pulp 13, the artificial dermis 11, and the artificial epidermis 12) can be fabricated by modern 3D printing technologies, casting or spray coating technologies, but are not limited to it. The electronic components of the sensor system 1 that participate in the transfer or process or generation of signals such as the sensor signals can be fabricated with 3D printing technologies directly in the complete finger build-up, if desired, as well.

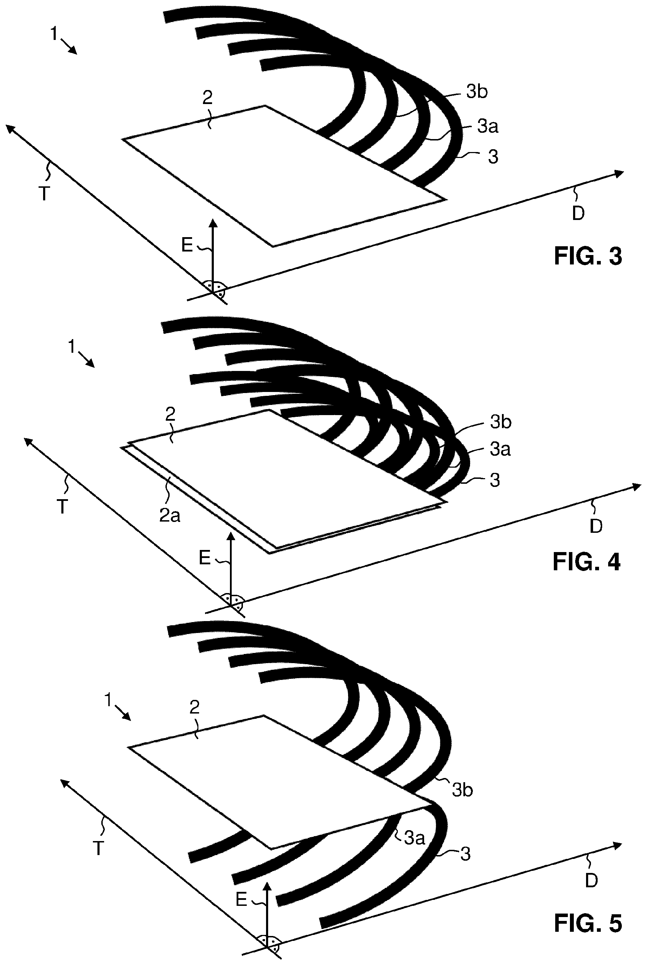

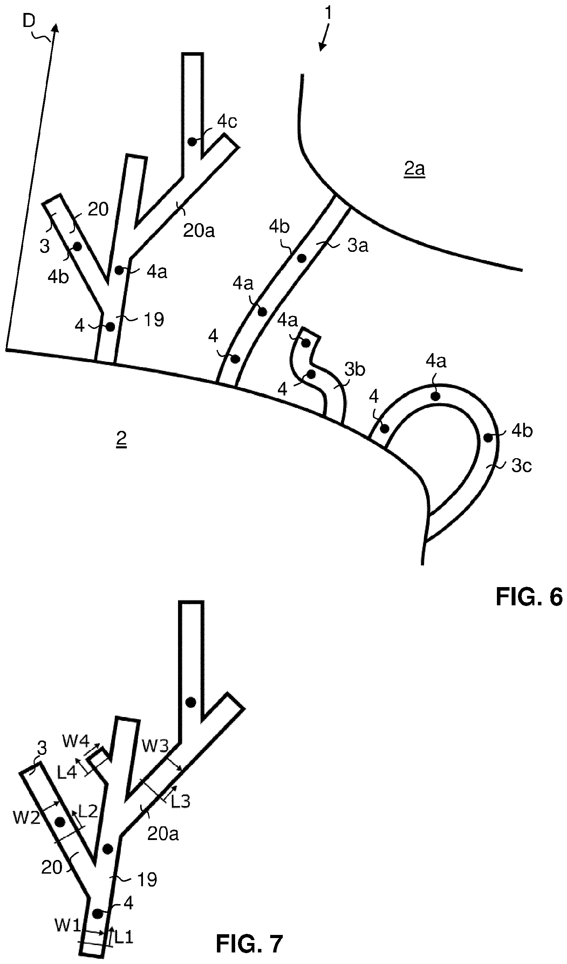

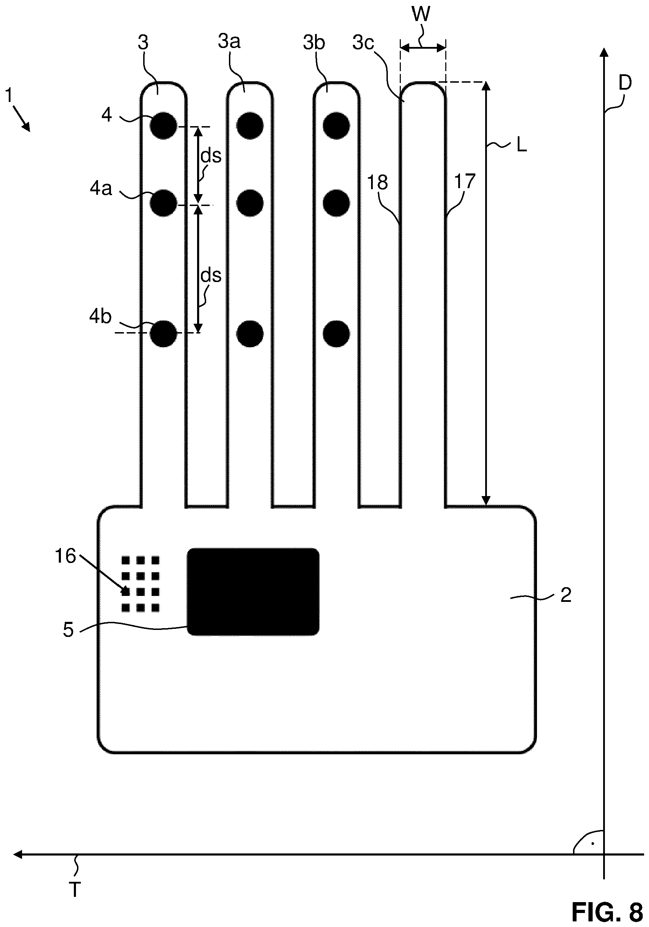

As follows from figures 3 to 8, the sensor systems 1 depicted in the figures comprise a plurality of supporting devices 3, 3a, 3b, ..., which are configured separately from one another. That is, the supporting devices 3, 3a, 3b, ... are integrally connected to the central device 2 with one of their ends and while their remaining parts extend away from the central device 2. In fact, with the exception of some supporting devices (second supporting device 3a when seen from the left side) of the sensor system 1 depicted in figure 6, all other supporting devices 3, 3b, 3c have here free ends. In the present example the central device 2 and the supporting devices 3, 3a, ... are provided as a single-piece element. As also follows from these figures, the supporting devices 3, 3a, 3b, ... can have different shapes, e.g. a straight shape (see figures 3 to 5 and 8), a branched shape or a curved shape (see figure 6), etc. Furthermore, different arrangements and/or orientations of the supporting devices 3, 3a, 3b, ... are conceivable. For example, supporting devices 3, 3a, 3b, ... can be arranged next to one another with respect to a transverse direction T (see figure 3 and 8) or supporting devices 3, 3a, 3b, ... could be arranged above one another with respect to an extension direction E extending perpendicularly to the elongation direction D so as to form a stack (see figure 4). In addition, a particular supporting device 3, 3a, 3b, ... can be in connection with two or more central devices 2, 2a, see the second supporting device 3a of figure 6, In fact, whereas one of its ends is an integral part of a first central device 2, its opposing further end is an integral part of a second central device 2a. The central device 2 depicted in figure 8 comprises a processing device 5 and an interface device 16. The processing device 5 is configured to process the sensor signals. A conceivable processing device 5 is known in the state of the art and can correspond to an integrated circuit chip, a microprocessor, etc. The interface device 16 could comprise one or more pads or one or more plugs or one or more wire bonds (not depicted). The interface device 16 serves as a power supply device that can supply power to the sensor system 1 and/or can serve the purpose of a readout device that allows a readout of the sensor signals being transmitted from the sensor device 4 to the central device 2 and thus to the interface device being arranged on the central device 2.

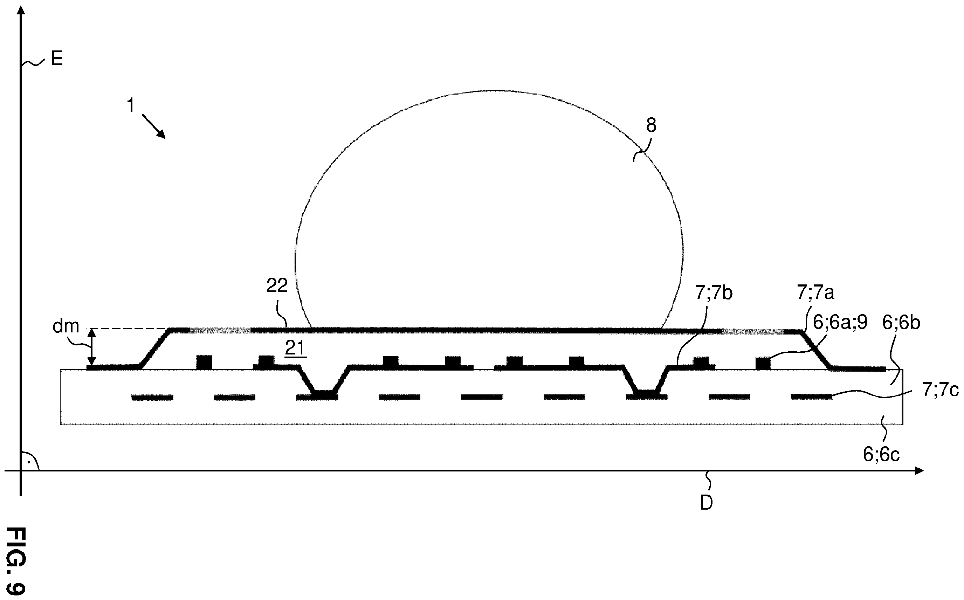

This flexibility or capability of being bended is enabled, inter alia, by the shape of the individual supporting devices 3, 3a, 3b, .... Namely, and as best seen in figure 8, each supporting device 3, 3a, 3b, ... is of an elongated shape which extends here along an elongation direction D. In particular, each supporting device 3, 3a, 3b, ... is of an essentially one-dimensional design with respect to the elongation direction D. In other words, a length of the supporting device 3, 3a, 3b, ... along the elongation direction D is larger than a thickness (see also figure 9) of the supporting device 3, 3a, 3b, ... along the extension direction E extending perpendicularly to the elongation direction D. Furthermore, a length L of the supporting device 3, 3a, 3b, ... along the elongation direction D is larger than a width W of the supporting device 3, 3a, 3b, ... along a transverse direction T extending perpendicularly to the elongation direction D and to the extension direction E. In figure 3 to 5 and 8, the supporting devices 3, 3a, 3b, ... have an essentially straight shape with sides 17, 18 that run essentially parallel to one another as well as essentially parallel to the elongation direction D. However, other shapes of the supporting device 3, 3a, 3b, ... are likewise preferred. Namely, and as indicated in figure 6, the supporting devices 3, 3a, 3b, ... can have regions running at an angle to the elongation direction D such as an elongated supporting main region 19 from which one or more supporting side regions 20, 20a, ... extend laterally. In other words, the supporting device 3, 3a, 3b, ... can be branched. The supporting devices 3, 3a, 3b, ... can also have a curved shape, etc.

It should be noted that also supporting devices 3, 3a, 3b, ... that are not straight in shape preferably have the largest geometrical extension along the elongation direction D. The largest geometrical extension along the elongation direction D can in this case be understood as the overall sum of the length-components of the supporting device 3, 3a, 3b, ... along the elongation direction D. As indicated in figure 7, a total length L = sum(L_n) of all sub parts, i.e. of a supporting main region 19 and of all branches or supporting side regions 20, 20a, ... is larger than a width of the supporting device, wherein said width corresponds to the largest width amongst W_max = max(W_n)..

As follows from figures 6 and 8, the sensor system 1 comprises a plurality of sensor devices 4, 4a, .... In fact, each supporting device 3, 3a, 3b, ... comprises several sensor devices 4, 4a, ... which are arranged here along the supporting devices 3, 3a, 3b, ... and at least partially along the elongation direction D. Furthermore, each sensor device 4, 4a, ... is followed by another sensor device 4a, 4b..., i.e. the sensor devices 4, 4a, ... are arranged in succession. In the depicted examples a distance between successive sensor devices 4, 4a, ... differs. However, constant distances ds between successive sensor devices are likewise conceivable.

As best seen in figure 9, at least some of the sensor devices 4 can be at least partially integrated into the supporting devices 3, 3a, 3b, .... In fact, the depicted supporting device 3 comprises several supporting layers 6, 6a, ... and the sensor device 4 comprises several sensor layers 7, 7a, ..., which are arranged above one another in an alternating manner with respect to the extension direction E extending perpendicularly with respect to the elongation direction D. In particular, figure 9 depicts an embodiment wherein the supporting device 3 comprises three supporting layers 6 or 6a, 6b, 6c and the sensor device 4 comprises three sensor layers 7 or 7a, 7b, 7c. Hence, the sensor system 1 comprises a multi-layer structure that is constituted by the sensor layers 7 or 7a, 7b, 7c and the supporting layers 6 or 6a, 6b, 6c. In the depicted example, the multi-layer structure comprises in this sequence with respect to the extension direction E the following layers and when seen from a top of the sensor system towards a bottom of the sensor system:
- a first sensor layer 7, which is called herein the membrane layer 7a;
- a first supporting layer 6, which is called herein a first interconnection layer or a protection layer 6a;
- a second sensor layer 7, which is called herein an electrode layer 7b;
- a supporting layer 6, which is called herein a second interconnection layer 6b;
- a third sensor layer 7, which is called herein the wiring layer 7c;
- and a third supporting layer 6, which is called herein the base layer 6c.

The base layer 6c comprises or consists of at least one electrically insulating element and is furthermore configured to support the sensor layers 7, 7c. The interconnection layers 6b, 6c comprise or consist of at least one electrically insulating element, as well. The membrane layer 7a, the electrode layer 7b, and the wiring layer 7c are here configured to yield the at least one sensor signal. The electrode layer 7b comprises electrodes, an electrical shielding element in the form or a metallic grid, and anchor elements that are configured to mechanically and/or electrically connect the electrode layer to the membrane layer (not depicted). The wiring layer 7c is furthermore configured to transmit the sensor signal to the central device 2 via one or more readout elements and/or one or more supply elements such as electrically conducting wires (not depicted).

Moreover, and as also follows from figure 9, the membrane layer 7, 7a is arranged at least partially in a suspended manner, wherein a gap 21 is formed between the membrane layer 7a and the first interconnection layer or the protection layer 6a. In other words, the membrane layer 7a is at least partially arranged at a distance dm from the layer (here the first interconnection layer or protection layer 6a) the membrane layer 7a is arranged on. Furthermore, the membrane layer 7, 7a is deformable and is spring-mounted via spring elements.

Furthermore, in the present example, the membrane layer 7a and the electrode layer 7b constitute a capacitive sensor, wherein upon a deformation of the membrane layer 7a, the impedance between the membrane layer 7a and the subjacent electrode layer 7b changes, i.e. a capacity changes. This change can be measured and, if desired, hereby any outer influences which deform the membrane layer 7a. The capacitive sensor preferably is configured to sense pressure and/or forces and/or vibration. Thus, the sensor system 1 according to the invention comprises capacitive sensor devices 4, 4a, ... that allow the detection of light static touch as well as dynamic signals like vibrations in the skin, hereby replicating the main mechanical receptors in our skin.

A movement element 8 is arranged on the membrane layer 7, 7a, in particular on an upper side 22 of the membrane layer 7a that is facing away from the supporting device 3. That is, the movement element 8 is facing towards an outside. Here, said movement element 8 has an essentially round shape and is provided by a solder ball or cap. The movement element 8 is configured to move the membrane layer 7, 7a along one or more spatial directions upon an application of a force on the movement element 8. The movement of the membrane layer 7a could correspond to a vertical movement, i.e. a movement along the extension direction E such as towards and away from the interconnection layer or protection layer 6a the membrane layer 7a is arranged on. The movement can also correspond to a rotational movement, i.e. to a tilt movement about one or more rotational axes.

Furthermore, stopper elements 9 are here arranged between the membrane layer 7a and the first interconnection layer or protection layer 6a. Here, the stopper elements 9 are an integral part of the first interconnection layer or protection layer 6a. The first interconnection layer or protection layer 6a can thus also be referred to as stopper-protection layer. The stopper elements 9 or the stopper-protection layer 6, 6a is configured to influence and/or modify a movement of the membrane layer 7, 7a as they provide an abutment for the membrane layer 7, 7a.

As mentioned initially, the present invention allows a direct integration and connection of a multitude of sensing structures into a complex, soft body. This is done by a flexible substrate comprising the central device 2 and the supporting device 3 with a multitude of sensor devices 4, 4a, ... that constitute a single-piece or monolithic substrate. The proposed architecture describes a possibility to have a high density sensor network which can be integrated in soft material. Since the sensor system 1 is built up monolithically, the problems of electric integration are solved. In fact, the sensing network architecture solves the integration into soft materials by using supporting devices 3, 3a, ... that have a very thin and flexible and essentially one-dimensional design, similar to nerve fibers in the human skin. These thin fibers 3, 3a, ... solve the integration into a soft material by a geometric flexibility rather than being dependent on highly stretchable materials. In this way, the issues arising from using stretchable materials and conductors can be avoided.

The design according to the invention is based on processes which are typical for the fabrication of so called redistribution layers (RDL layers). The advantage of sticking to those technologies is the simpler transfer of the fabrication to OSATs (Outsourced Semiconductor Assembly and Test) providers who have large fabrication capabilities for those technologies. That is, the sensor architecture of the sensor system 1 according to the invention is based on: 1) building a multilayer substrate of preferably polymer layers 6, 6a, ... and metal layers 7, 7a, ..., 2) fabricating suspended membrane layers 7a on top of it and 3) releasing the whole structure from a flat fabrication carrier for the integration into 2D or 3D devices 10. That is, sensors devices or switches 4, 4a, ... can be directly fabricated on or in the flexible/semi-flexible substrate. Suspended membranes 7a on the flexible substrate can be used for the sensing / switching purposes. Readout IC's can be placed on the same substrate, allowing the readout. The suspended membranes 7a can be fabricated in almost arbitrary thickness. The deformation of the membrane 7a can be read out capacitively to form a pressure/vibration sensor or other type of transducer. In switching, an electro-static force can be used to deform the switching membrane and allow a switching process. By sticking consequently to technologies which are available in mass fabrication lines, especially the modern packaging industry, the technology has great upscaling potential. It is possible to fabricate the sensor systems 1 on larger substrates like panel formats available in the packaging or PCB industry. Even roll-to-roll fabrication would be possible.

In the following, conceivable manufacturing steps are outlined briefly. The monolithical build-up of RDL (redistribution layer) structure involves an RDL structure being built up with typical wafer level processes or PCB technologies, involving an either rigid substrate or a carrier for thin substrates. To this end, the main steps in the manufacturing process are:
I - fabrication of the supporting layers 6, 6a, ..., i.e. the RDL layers, which preferably are polyimide layers, and the sensor layers 7, 7a, ... preferably being the wiring layer 7c and the electrode layer 7b, whereby an RDL substrate is formed;
II - fabrication of the membrane layer(s) 7a and the movement element 8 on top of the RDL substrate;
III - RDL substrate structuring and post fabrication steps.

In step (I) the RDL substrate is fabricated as a repetitive process of polyimide layers 6, 6a, ... and metal interconnections 7, 7a, .... That is, the RDL structure preferably is a multi-stack of isolating polymer material as supporting layers 6, 6a, ... and conductive interconnects as sensor layers 7, 7a, .... This is preferably followed by compatible membrane fabrication steps. The PI26xx family by HD Microsystems is used, different viscosities are used to achieve thick (e.g. 7.5 µm) and thin (e.g. 1 µm) layers. Structuring of the polyimide 6, 6a, ... is done via ICP etching with via sizes down to 5 µm. The sensor layers 7, 7a, ..., i.e. here the metal layers, are sputtered Ti-Cu layers (1 µm) which are structured with wet etching. The wiring layer 7c was successfully implemented down to 10 um L/S. The RDL layer stack could as well be used for other purposes in a final device, e.g. to interface different devices or as a connector. Different polymer and metal interconnections could be chosen in this stack if necessary for other applications. Thickness variations are likewise conceivable.

The membrane layers 7a and movement element 8 in step (II) on the RDL substrate uses RDL compatible processes with slight adaptions. Newly introduced is a sacrificial layer (not depicted), here a polymer layer, e.g. LOR 30B, MicroChem, which can be used for two purposes. For example, a first sacrificial layer can be used to form a polymer bump (e.g. 4 µm) over the electrodes which will define the three dimensional shape of the membrane layer 7a. Variations in the layer thickness will result in changes of the capacitance range of the sensors. In addition or alternatively, a second sacrificial layer can be used as a masking layer (0.5 µm) to define the final shape of the solder ball, i.e. the movement element 8. The membrane layer 7a is a sputtered TiCuAu layer (1 µm), structured again with wet etching. After building the complete substrate stack, another plasma etching process step can be used to structure the RDL layer stack and separate the structures such as the finger structures depicted in figure 1. Finally the solder paste that is to be used as the movement element 8 is dispensed with a stencil process. That is, it is preferred that the membrane layer 7a is produced while a sacrificial layer is applied on a supporting layer 6, 6a the membrane layer 7a is to be arranged on. Said sacrificial layer is subsequently removed so as to suspend the membrane layer 7a on said supporting layer 6. The sacrificial layer can withstand the succeeding processing steps while still being able to be dissolved in a final process step. Particularly heat and chemical resistance are important. Membranes or membrane layers 7a can be released prior or after the integration of IC components, depending on the process compatibility. IC integration typically involves, but is not limited, to the application of interconnects (e.g. solder bumps, pillars), chip transfer & bonding and overmold. Areas of the assembly can temporarily or finally be covered by protective housings. The membranes or membrane layers can be released in a release step. The flexible electronics part can be structured by various methods (laser, mechanical, etching) which are compatible with the previous processing steps.

In the post fabrication steps (III) integrated circuits (IC) or the like can be placed on solder pads to form a connection via a ball grid array. The solder paste then is reflown to form the solder connections to the chip on one side and the bumpers, i.e. the movement element(s) 8, on the membrane layer 7a on the other side. The shape of the bumper or movement element 8 can be varied from a thin cap to an almost round ball, depending on the desired application. The shape is defined by the amount of dispensed solder as well as the size of the pad opening in the sacrificial polymer. The final steps are the etching of all sacrificial polymer layers to release the membrane layer(s) 7a as well as the release from the carrier substrate. The release is done by peeling of the whole layer stack from the carrier. So far no specific release layers were needed as the sensing structures, i.e. the sensor layers 7, 7a, ..., survive the mechanical peel-off. That is, the fabricated structures can be completely or partly released from the carrier, resulting in a sensor system 1 with rigid, semi-rigid and / or flexible regions. The result is a flexible substrate with IC components directly connected to active components via a semi- rigid or flexible substrate. The fabrication on a carrier substrate is not mandatory, but allows an easier process control due to better substrate handling.

The advantages are manifold such as a much cheaper fabrication of sensing / switching structures directly in package (avoid Silicon processing and transfer), larger MEMS structures being possible (as packaging technologies can be done on larger substrates, not depending on Si processing), integration on very thin and flexible substrates without material mismatches - flexible electronics, avoid interface problems in transfer/bonding by monolithical processing, etc.

**LIST OF REFERENCE SIGNS**

| | | | |
|---|---|---|---|
| 1 | sensor system | 17 | side |
| 2, 2a | central device | 18 | side |
| 3, 3a, ... | supporting device | 19 | main region |
| 4, 4a, ... | sensor device | 20, 20a, ... | side region |
| 5 | processing device | 21 | gap |
| 6, 6a, ... | supporting layer | 22 | upper side |
| 7, 7a, ... | sensor layer | | |
| 8 | movement element | D | elongation direction |
| 9 | stopper element | E | extension direction |
| 10 | three-dimensional device | T | transverse direction |
| 11 | artificial dermis | L | length |
| 12 | artificial epidermis | I1, I2, ... | length-component |
| 13 | artificial pulp | W | width |
| 14 | protrusion | ds | distance |
| 15 | indentation | dm | distance |
| 16 | interface device | | |

## Claims

1. A sensor system (1) for a three-dimensional device (10), in particular for arrangement on a surface of and/or in a surface of a three-dimensional device (10), the sensor system (1) comprising:
- at least one central device (2);
- at least one supporting device (3); and
- at least one sensor device (4);
wherein the supporting device (3) is in connection with the central device (2),
wherein the sensor device (4) is in communication with the central device (2), and
wherein the central device (2) is configured to receive at least one sensor signal from the sensor device (4),
**characterized in that** the supporting device is of an elongated shape and extends at least partially along an elongation direction (D), and
**in that** the sensor device (4) is at least partially integrated into the supporting device (3).

2. The sensor system (1) according to claim 1, wherein the central device (2) and the supporting device (3) are provided as a single-piece element.

3. The sensor system (1) according to any one of the preceding claims, wherein the sensor system (1), in particular the central device (2) and/or the supporting device (3) and/or the sensor device (4), is bendable and/or stretchable.

4. The sensor system (1) according to any one of the preceding claims, wherein the supporting device (3) is of an essentially one-dimensional design with respect to the elongation direction (D), and/or
wherein a length of the supporting device (3) along the elongation direction (D) is larger than a thickness of the supporting device (3) along an extension direction (E) extending perpendicularly to the elongation direction (D), and/or
wherein the length of the supporting device (3) along the elongation direction (D) is larger than a width of the supporting device (3) along a transverse direction (T) extending perpendicularly to the elongation direction (D) and to the extension direction (E).

5. The sensor system (1) according to any one of the preceding claims, further comprising at least one further supporting device (3a), wherein said further supporting device (3a) is configured at least partially preferably entirely separately from the supporting device (3), the sensor system (1) preferably comprising a plurality of supporting devices (3, 3a, 3b, ...).

6. The sensor system (1) according to any one of the preceding claims, wherein the sensor system (1) comprises two or more sensor devices (4, 4a), and
wherein said two or more sensor devices (4, 4a) are arranged at least partially along the supporting device (3) and/or along the elongation direction (D), and/or
wherein said two or more sensor devices (4, 4a) are arranged in succession, and/or wherein two or more sensor devices (4, 4a) are the same or different from one another.

7. The sensor system (1) according to any one of the preceding claims, wherein the supporting device (3) comprises at least one supporting layer (6),
wherein the sensor device (4) comprises at least one sensor layer (7), and wherein the supporting layer (6) and the sensor layer (7) are preferably arranged above one another with respect to an extension direction (E) extending perpendicularly with respect to the elongation direction (D), and/or
wherein the supporting layer (6) and the sensor layer (7) are preferably arranged alternatingly with respect to the extension direction (E).

8. The sensor system (1) according to claim 7, wherein at least one sensor layer (7) is provided as a membrane layer (7a) being configured to yield the at least one sensor signal and/or to enable an electrical switching, and/or
wherein at least one sensor layer (7) is provided as an electrode layer (7b) being configured to yield the at least one sensor signal, the electrode layer (7b) preferably comprising or consisting of at least one electrode, and/or
wherein at least one sensor layer (7) is provided as a wiring layer (7c) being configured to yield the at least one sensor signal and/or to transmit the at least one sensor signal to the central device (2), the wiring layer (7c) preferably comprising at least one readout element and/or at least one supply element, and/or
wherein at least one supporting layer (6) is provided as a base layer (6c) being configured to support the at least one sensor layer (7, 7c), and/or
wherein at least one supporting layer (6) is provided as an interconnection layer (6b, 6c) comprising or consisting of at least one electrically insulating element.

9. The sensor system (1) according to claim 8, wherein the membrane layer (7, 7a) is arranged at least partially in a suspended manner, and/or
wherein the membrane layer (7, 7a) is deformable, and/or
wherein the membrane layer (7, 7a) is spring-mounted preferably via one or more spring elements.

10. The sensor system (1) according to claim 8 or 9, wherein the membrane layer (7, 7a) and the electrode layer (7, 7b) constitute the sensor device (4), said sensor device (4) preferably being a capacitive sensor.

11. The sensor system (1) according to any one of claims 8 to 10, further comprising at least one movement element (8) that is arranged on the membrane layer (7, 7a), wherein the movement element (8) is configured to move the membrane layer (7, 7a) along one or more spatial directions, and/or
further comprising at least one stopper element (6, 6a, 9) that is configured to influence and/or modify a movement of the membrane layer (7, 7a).

12. A three-dimensional device (10) comprising at least one sensor system (1) according to any one of the preceding claims, wherein the three-dimensional device (10) preferably is a biomimetic device, artificial skin, a prosthesis a robot, a mechanical device or an electromechanical device, and/or
wherein the sensor system (1) preferably is implemented as a tactile sensor system.

13. The three-dimensional device according to claim 12, wherein at least one sensor system (1) is arranged at least partially within the three-dimensional device and/or at least partially on a surface of the three-dimensional device and/or at least partially outside of the three-dimensional device and/or at least partially extends through the three-dimensional device and/or is at least partially bent.

14. A method of producing a sensor system (1) for a three-dimensional device (10), preferably a sensor system according to any one of claims 1 to 12, the method comprising the steps of:
(i) Providing at least one central device (2);
(ii) Providing at least one supporting device (3); and
(iii) Providing at least one sensor device (4);
wherein the supporting device (3) is in connection with the central device (2),
wherein the sensor device (4) is in communication with the central device (2), and
wherein the central device (2) is configured to receive at least one sensor signal from the sensor device (4),
**characterized in that** the supporting device (3) is of an elongated shape and extends at least partially along an elongation direction (D), and
**in that** the sensor device (4) is at least partially integrated into the supporting device (3).

15. The method according to claim 14, wherein the provision of the central device (2) in step (i) and the provision of the supporting device (3) in step ii) correspond to the same procedural step and/or occur simultaneously, and/or
wherein step (ii) comprises the production of at least one supporting layer, preferably a polymer layer, and step (iii) comprises the production of at least one sensor layer, preferably a metallic layer, and wherein steps (ii) and (iii) are preferably alternatingly repeated, and/or
wherein step (iii) furthermore comprises the production of at least one membrane layer, wherein a sacrificial layer is applied on a supporting layer the membrane layer is to be arranged on and in a first step, and wherein said sacrificial layer is removed so as to suspend the membrane on said supporting layer in a second step.
